# EUROPEAN PATENT APPLICATION

(11) **EP 2 226 624 A1**
(43) Date of publication of application: **08.09.2010**
(21) Application number: 08855537.0
(22) Date of filing: 26.11.2008
(51) Int. Cl.: G01N 21/88, C08J 7/04, G01N 21/84, G01N 21/892, G01N 21/894, H01M 2/16, B05D 3/00

(54) **METHOD FOR INSPECTING COATING FILM DEFECT IN RESIN-COATED FILM**

(30) Priority: 30.11.2007 JP 2007310157
(71) Applicant: Sumitomo Chemical Company, Limited, Tokyo 104-8260 (JP)
(72) Inventor: SUZUKI, Takashi, Niihama-shi Ehime 792-0842 (JP)
(74) Representative: Hart-Davis, Jason
(86) International application number: PCT/JP2008/071918
(87) International publication number: WO 2009/069813

(57) **Abstract**

The method for inspecting a resin-coated film of the present invention is a method for inspecting defects of a coating of a resin-coated film comprising a film and the coating formed by applying a resin solution on the film, in which the method is carried out by irradiating the coating with inspection light having a peak wavelength of emission intensity within the range of 385 to 415 nm and detecting reflected light of the inspection light, which can inspect defects of the coating of a resin-coated film with high accuracy.

## Description

### FILED OF THE INVENTION

The present invention relates to a method for inspecting defects of a coating of a resin-coated film comprising a film and a coating formed thereon by applying a resin solution to the film.

### BACKGROUND ART

A resin-coated film (hereinafter occasionally referred to as "heat-resistant separator") obtained by applying a solution containing a heat-resistant, nitrogen-containing aromatic polymer and a ceramic powder to a film to form a coating is used as a separator for a nonaqueous electrolyte cell. When the heat-resistant separator has defects such as pin holes and peelings of the coating, its heat-resistance decreases, so that the safety of a cell comprising such a separator may deteriorate.

A resin-coated sheet produced by applying a resin to a release sheet is used for producing a prepreg. Defects, such as the lack of the resin, of the coating of the resin-coated sheet harm the quality of the prepreg.

Accordingly, it is desired to develop a method for inspecting defects of a coating of a resin-coated film or a resin-coated sheet.

A method comprising irradiating a coating of a resin-coated sheet with inspection light having a peak wavelength within the range of 300 to 400 nm is known as a method for detecting defects of a coating of a resin-coated sheet. Specifically, the detection is performed using a black light blue fluorescent lamp, which is a near-ultraviolet light source having a wavelength within the range of 340 to 380 nm (see JP-A-09-136323). The peak wavelength of the emission intensity of this lamp is within the range of 350 to 360 nm.

According to the above method, however, accuracy of detection is not necessarily high enough, and it has been particularly desired to provide an inspection method having higher accuracy, which can detect minute defects of the coating of a heat resistant separator.

Hereinafter, in the present invention, both a film and a sheet may be sometimes referred to as a "film," without distinguishing between the film and the sheet.

### SUMMARY OF THE INVENTION

An object of the present invention is to provide a method for accurately inspecting defects of a coating of a resin-coated film comprising a film and a coating formed thereon by applying a resin solution on the film.

The present inventor has made intensive studies in order to achieve the object described above. As a result, he has found that, when a coating is irradiated with light having a peak wavelength of emission intensity within the range of 385 to 415 nm, even minute defects of the coating of the heat-resistant separator can be detected with high accuracy, and has completed the present invention.

Accordingly, the present invention relates to a method for inspecting defects of a coating of a resin-coated film comprising a film and the coating formed by applying a resin solution on the film, wherein the method is carried out by
irradiating the coating with inspection light having a peak wavelength of emission intensity within the range of 385 to 415 nm and detecting reflected light of the inspection light..

According to the present invention, the defects of the coating of the resin-coated film comprising a film and a coating formed thereon by applying a resin solution on the film, in particular, the heat-resistant separator can be inspected with high accuracy.

### BRIEF DESCRIPTION OF DRAWINGS

Fig. 1 schematically shows a method for inspecting defects of a coating.
Fig. 2 is a graph showing a wavelength area of inspection light, etc.
Fig. 3 shows the results of Examples.

### Reference Numerals

- 1: Resin-coated film
- 2: Porous polyethylene film
- 3: Coating comprising aramid and alumina
- 4: Light source
- 5: CCD camera
- 6: Relative intensity of inspection light used in the present invention, which has a peak wavelength of emission intensity of 400 nm
- 7: Relative intensity of inspection light conventionally used, which has a peak wavelength within the range of 300 to 400 nm
- 8: Reflectance of a porous polyethylene film
- 9: Reflectance of a coating
- 10: Relative sensitivity of a CCD camera

### EMBODIMENTS FOR CARRYING OUT THE INVENTION

Examples of the resin-coated film comprising a film and a coating formed thereon by applying a resin solution on the film include resin coated films prepared by applying a solution containing a heat-resistant, nitrogen-containing aromatic polymer and a ceramic powder to a film. Such resin-coated films are used as heat-resistant separators for non-aqueous electrolyte cells, and are disclosed in JP-A-2000-30686.

Hereinafter, the present invention will be explained by making reference to a resin-coated film comprising a porous polyethylene film, aromatic polyimide (hereinafter occasionally referred to as "aramid") as a heat-resistant, nitrogen-containing aromatic polymer, and alumina as a ceramic powder.

The alumina fine powder is added to a solution of the aromatic polyamide in an organic polar solvent such as N-methyl-2-pyrrolidone to form a slurry, and the slurry is applied onto the porous polyethylene film by an application method using a bar, a knife or a die. After the precipitation of the polymer, the organic polar solvent is removed, and the polymer is dried to form a resin-coated film.

The resin-coated film has a thickness of about 5 to 100 µm, while the coating may have a thickness of about 1 µm to 50 µm, which may not be precisely measured because the fine particles of aramid and alumina are dispersed in the porous polyethylene film.

In the coating, defects such as peelings or streaks may sometimes be generated. According to the present invention, theoe defects are detected by irradiating the coating with inspection light having a peak wavelength of emission intensity within the range of 385 to 415 nm and detecting the light reflected from the coating.

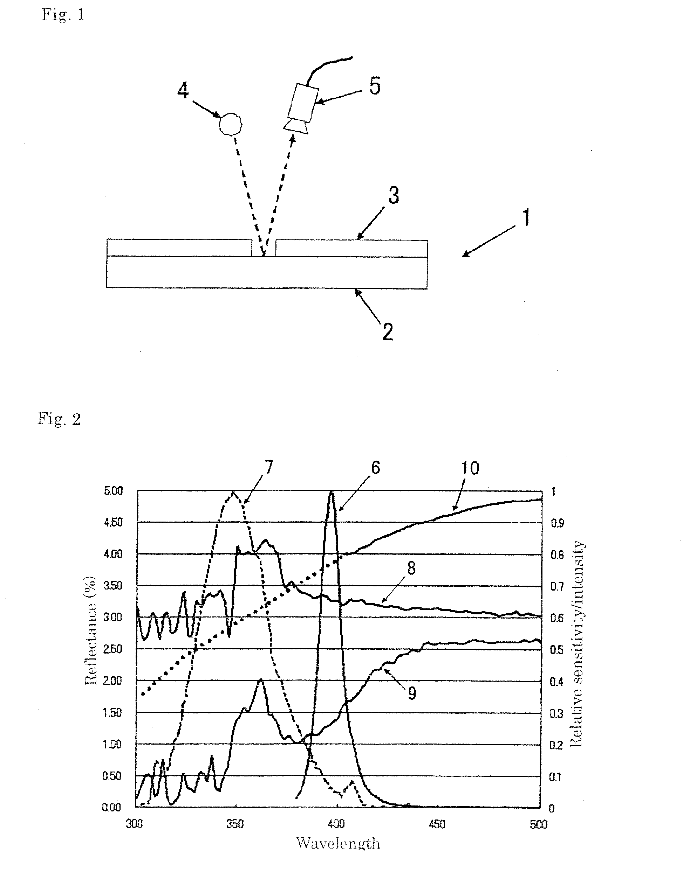

Fig. 1 schematically shows a method for inspecting defects of a coating. Aresin-coated film 1 has a coating 3 containing aramid and alumina formed on a porous polyethylene film 2. The surface of the coating is irradiated with inspection light having a peak wavelength of emission intensity within the range of 385 to 415 nm from a light source 4, and the light reflected from the coating is captured with a CCD camera 5, and the signals from the CCD camera are processed with an image processor (not shown), thereby detecting the defects.

It is possible to perform the defect inspection continuously by feeding a long resin-coated film, or batchwise with a sheet-fed resin-coated film.

Since there is a difference between the reflectance from a defect-free area and the reflectance from an area having defects, the area having defects can be detected by irradiating the surface of the coating with the inspection light, observing the light reflected from the coating with the CCD camera, and checking the intensity difference.

When a conventional black light blue fluorescent lamp is used and inspection light having a wavelength range of 300 to 400 nm and a peak wavelength of emission intensity of 350 nm is irradiated, the sensitivity for detecting defects lowers, and minute defects may not be detected.

Fig. 2 is a graph showing a wavelength range of inspection light, and the like, in which 6 is the relative intensity of inspection light having a peak wavelength of emission intensity of 400 nm that is used according to the present invention; 7 is the relative intensity of conventional inspection light having a wavelength within the range of 300 to 400 nm; 8 is the reflectance by a porous polyethylene film 9 is the reflectance of a coating containing aramid and alumina; and 10 is the relative sensitivity of a CCD camera.

The reflectance is a value measured using a spectrophotometer (MPC-2200 manufactured by Shimadzu Corporation).

According to Fig. 2. since the relative sensitivity of the CCD camera is high at wavelength 400 nm, and also a difference between the reflectance from the porous polyethylene film and that from the coating is equal or more at wavelengths 350 nm and 400 nm, it is considered that the sensitivity for defecting defects can be improved by the use of inspection light having a peak wavelength of 400 nm.

### EXAMPLES

Defect inspection was performed on a resin-coated film comprising a porous polyethylene film and a coating containing aramid and alumina formed thereon, which had a peeled area of the coating with a length of about 1 mm and a width of about 0.5 mm. Alight source was placed about 10 cm above the resin-coated film, and the film was irradiated with light. A CCD camera was set up at a height of 80 cm and at a reflection angle of 13 degrees, the light reflected from the coating was imaged and then processed with an image processor.

The devices and apparatuses used are as follows:
- Light Source:
   400 nm LED (a peak wavelength of 400 nm) manufactured by Imac Co., Ltd.
   392 nm Fluorescent lamp (peak wavelength of 392 nm) manufactured by I-tec System Cop., Ltd.

Black light blue fluorescent lamp (peak wavelength of 350 nm) manufactured by Panasonic Corporation
- CCD Camera:
   Line Sensor Camera manufactured by Nagase & Co., Ltd.
- Image Processor:
   Image processor manufactured by Nagase & Co., Ltd.

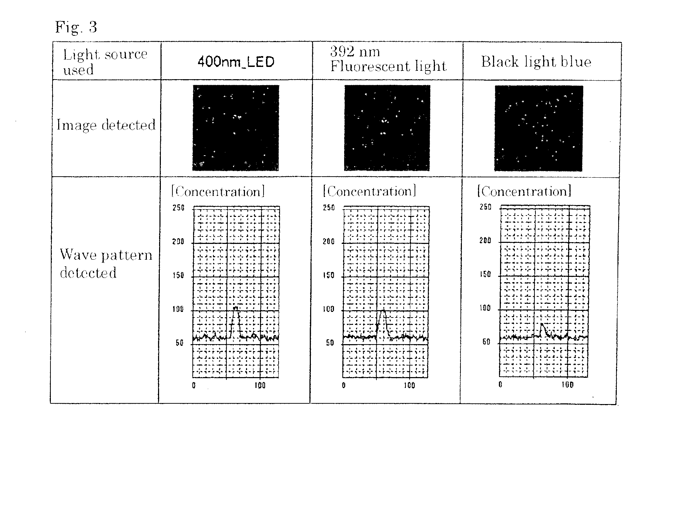

Fig. 3 shows the results of images detected and wave patterns detected. When the inspection light having a peak wavelength of 400 nm and a peak wavelength of 392 nm was irradiated, the defect could be accurately detected. In contrast, when the conventional inspection light having a peak wavelength of 350 nm was irradiated, the defect could marginally detected, but a defect smaller than the above defect (peeling) might not be possibly detected.

### INDUSTRIAL APPLICABILITY

As stated above, according to the present invention, defects of a coating of a resin-coated film comprising a film and a coating formed thereon by applying a resin solution on the film, particularly a heat-resistant separator can be inspected with high accuracy.

## Claims

1. A method for inspecting defects of a coating of a resin-coated film comprising a film and the coating formed by applying a resin solution on the film, wherein the method is carried out by
irradiating the coating with inspection light having a peak wavelength of emission intensity within the range of 385 to 415 nm and
detecting reflected light of the inspection light.

2. The inspection method of Claim 1, wherein the film is a porous polyethylene film, and the coating is a coating obtained by applying a solution containing a heat-resistant, nitrogen-containing aromatic polymer and a ceramic powder.
